# EUROPEAN PATENT APPLICATION

(11) **EP 2 708 440 A1**
(43) Date of publication of application: **19.03.2014**
(21) Application number: 12782183.3
(22) Date of filing: 09.05.2012
(51) Int. Cl.: B61L 27/00, B61L 19/00, B61B 1/00

(54) **SUSTAINABLE CIRCULAR TRACK LINE NETWORK**

(30) Priority: 10.05.2011 CN 201110128735
(71) Applicant: Dai, Sucai, Nanjing, Jiangsu 210009 (CN)
(72) Inventor: Dai, Sucai, Nanjing, Jiangsu 210009 (CN)
(74) Representative: Hryszkiewicz, Danuta
(86) International application number: PCT/CN2012/075257
(87) International publication number: WO 2012/152219

(57) **Abstract**

A sustainable circular track line network, including: taking a turning crossroad covered with a multi-cross site as the core or a key node of a circular line/network; designing a circular route to reduce red lights and optimize the scheduling, equalizing and enhancing the density of traffic flow, and collecting, distributing and expanding the coverage area in diversity, so that the separation-reunion intercommunication recombination can be met during the operation of a train, the passengers can change lines with the train or transfer conveniently, and at the same time the construction and operation costs of the track line wire are reduced. The turning crossroad is at least one three-crossroad with bidirectional and dual-line integration and includes at least one group of at least tri-directional turning tracks, with the turning track turning to be an outgoing line with a bidirectional port at a small turning side by at least three return lines with bidirectional ports successively to form a circle.

## Description

The invention relates to the railway route-system and the line/network planning, and more particularly to the structure of multi-track turnouts and junctions, and the switch-assemblage involved therein.

Present railway networks can be classified into two --- connected or disconnected, resulting in two effects of traveling --- express and transit. The transit passengers have to walk, i.e. "transit on foot".

A connected railway is the foundation of vehicles' operation. However, the Metro lines adopt Back-and-Forth routing, namely BF (Back-and-Forth) lines, disconnecting each other. Even traditional two or four branched fork-lines remain compound BF routing, thereby causing traffic flow in branches cut by half, and therefore failing in continuous branching. Although connected by complex junction yards, the traditional railway is bond to too many switches and crosses, i.e. red-lights to dispatch continuous trains in BF-trips, local and express; and therefore, fails in sparse train-shifts.

Moreover, their stations or hubs with only parallel or overhead crossing tracks occupy space and layover narrowly, relying mainly on general traffics for feeder-ship. Stations become larger, higher and deeper, when bus/taxi stations and car parking gather all around, resorting crowds, causing complicated inter- change inside and disorder or even jams outside.

In summary, based on the traditional full-return route-system, lines can hardly connect each other by existing turnouts or junctions while keeping traffic flow saturate and balanced, let alone reorganizing multi-way trains; rail-transit in general can hardly expand its service layover to replace general traffics.

In view of the above described problems, it is one objective of the invention to break through the full-return routing in disconnected or stiffly connected networks; and instead, to employ circulating route-system in the properly connected and sustainable expending lines/networks; and in this way to minimize red-lights, enhance and balance multi-way traffic flows, and to facilitate vehicles' interchange instead of passengers'.

The circulating route-system helps poly-rails feeder-ship by covering or inserting or blading each other, deriving feeder-lines/nets, bibasic turnouts/ hubs and sections; facilitating more light-rails' turning instead of rapid rails'; and in this way, improving the service layover, safety and efficiency of the rail-transit in general.

To achieve the above objective, provided is fundamentally a sustainable circulating railway network, which comprises circular-turnouts covered by multi-way stations, as cores and/or key nodes of circulating lines/networks and of feeder-lines/nets derived; which breaks through the full-return BF routing and employs the circulating route-system to minimize red-lights, enhance and balance multi-way traffic flow; which facilitates the vehicles' interchange and reorganization, and the passengers' on-board and/or easy transfer; and which improves the service layover, safety and efficiency in general, and reduces the building and operating cost of the railway network.

The circular-turnout comprises at least three multi-connected Back-and-Forth ports, and at least one set of at least three-way circular V-ramps or tracks, facilitating at least tri-directional vehicles turning from the Back-track of each BF port into the Forth-track of the same(right or left) side nearby BF port, completing a circulation.

The multi-way station is a station or a group of sub-stations covering the circular-turnout, including a station or substation covering the bibasic circular-turnout or bibasic hub. The bibasic hub comprises at least two rail- types and at least tri-directional circular-V/v-ramps of at least one rail-type.

The circulating line/network includes semi-return circulating line and non-return circulating network. The circulating line/lines can be modified or merged into the circulating network when its/their peripheral terminals connected by the circular-turnouts into an outer circle. The circulating line comprises at least one of the circular-turnout connecting at least three double- track sections, and at least part of vehicles semi-return and circulating among at least three terminals. The circulating network comprises at least one inner-rings- combination; the inner-rings-combination is duplicable in two or four or six ways, comprising at least two inner-rings of same rotation, or at least one self- cross-loop, or at least one self-cross-loop plus at least one inner-ring of same rotation; the self-cross-loop comprises at least three open-end rings of same rotation.

The circular V-ramp including those in bibasic circular-turnout made of two rail-types in circulation comprises one way compound ramps, structuring a Crescent Junction (VCJ) or a serial of two VCJs. The VCJ is one way through, with all ramps inside parallel and non-crossing each other, diverging at the entrance and merging at the exit irreversible; assembled by: Platform Tracks (PT) by its longer and more curved side, an Overtaking Track (OT) by its shorter and less curved side, and a Train Yard (TY) in between.

The circular-turnouts include the switchable turnouts and the circular-switchable turnouts. The switchable turnout, including bibasic switchable turnout, comprises at least one d-m ramp; the circular-switchable turnout comprises at least one set of at least tri-directional circular V-ramps/tracks totally inserted by d-m ramps or D-M tracks. The d-m ramp or D-M track is one way, starting from a diverge-switch at the Back-track of a BF port and ending by a merge-switch at the Forth-track of another BF port, both switch-angles out- pointing and irreversible.

The circular-turnouts include plate-turnouts; the plate-turnout comprises at least one turn-plate and employs at least one plate-frozen model. The turn-plate is a ground plate or suspended plate, a bidirectional double-track plate or tri-directional triple-track plate, with its surface tracks or underneath track-slots longer than a single coach. When certain plate-turnouts perform plate-frozen model in the circulating network, the at least both ends plate-off section modifies into an at least double-shuttles line, without interfering the rest of traffic inside the network.

The multi-way station comprise the multi-lateral platform; the multi-lateral platform is monolayer or split-leveled or connected by split-leveled passages, comprising at least three boarding sides. When at least tri-directional trains of at least one rail-type stop by in a heads-by-ends manner, passengers may enjoy door-to-door circular-transfer.

The circulating line/network includes the feeder-line or feeder-net for poly-rails feeder-ship. The feeder-line covers or blades with the major rail-type, deriving the bibasic hub; the feeder-net is an inner-ring or inner-rings-combination inserting in the major rail-type, deriving the bibasic turnouts or hubs and bibasic sections. The bibasic hub comprises two rail-types and one set of at least tri-directional V/v-ramps of at least one rail-type. The bibasic section comprises parallel two rail-types and at least bidirectional double tracks.

The circular-turnout is restricted within the turnout range in a ship- lock structure, employing four ways of switching: diverge/merge both-on, d-on/m-off, d-off/m-on, diverge/merge both-off; the switchable-turnout employs at least one switch- frozen model, during which period a diverge/merge both-off ramp/track is modified as a parking lot or a shuttle line, without interfering rest of the traffics inside the circular-turnout.

### BENEFICIAL EFFECT OF THE INVENTION

1) Circular-turnouts as cores and/or key nodes sustainably connect double track sections into networks, causing circulate routing to minimize red lights, enhance and balance traffic flows, facilitate vehicles interchange and optimize the general dispatching and scheduling; upgrading express rate and general efficiency of people/vehicles/roads.
2) Since circulating line/network extends and expands sustainably and poly-rails feeder-ship improves service layover and facilitate passengers' easy transfer; they effectively replace general traffic to save energy and reduce its pollution.
3) By simplifying turnouts, junctions and stations, keeping existing double track sections and avoiding repeat constructions, the sustainable circulating line/network optimizes dispatch, safety and efficiency, reducing the building and operating cost in general.

FIG. 1 is a schematic view of the circulating lines/networks, positions of turnouts and hubs, structure of their modification and polybasic feeder-ship;
FIG. 2 shows the structure of 4V+ hollow-cross, 4VX hollow-cross and 8V hollow-star turnouts, and their door to door circular-transfer;
FIG. 3 magnifies FIG. 1-Yv/T2v turnouts and Bf = bF section in between;
FIG. 4 shows an I-shaped 4V turnout, or T-foot connected 2YT turnouts, and their switch-frozen models;
FIG. 5 shows the circular-transfer by a three lateral platform in a YT station when switch-frozen at Y3V model, and structure of three VCJs;
FIG. 6 shows structure of a T/TZ-turnout, inside which the d-m ramp across T-shoulders and the return track Z at T-foot;
FIG. 7 shows vehicles' interchange and re-organizing, and passengers' transfer in the T-turnout/station;
FIG. 8 shows vehicles' interchange and re-organizing in the Y3T turnout/station;
FIG. 9 shows a 4YT tree-line and its further modification into an A/4C circulating-network;
FIG. 10 magnifies FIG. 1-T8/T16, showing the structure of the bibasic Candlestick-hub;
FIG. 11 shows the 3YX/6YX triangle or hexagonal cross-interchange turnout;
FIG. 12 shows the 4YX/8YX square or octagonal cross-interchange turnout, structure of c1 feeder-net and 4YXv turnouts/stations;
FIG. 13 magnifies FIG. 12-Xv, showing the structure of the YXv turnout/station;
FIG. 14 shows the 4T and 4VCJ structure and 4P multi-lateral platforms, in a kite-hub and covering station;
FIG. 15 shows the structure of a hexagonal through-interchange hub;
FIG. 16 shows the position of 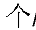 / 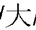 / 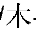 -hubs, and three inner-rings c1/4/5 threading a compound 4V hub and a kite-hub, and their modification into a polygonal inner-rings combination;
FIG. 17 magnifies FIG. 16-Mu, showing the structure of the 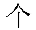 or 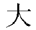 or 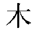 -hub;
FIG. 18 is the sketch map of a Cable-Cars' circulating-network;
FIG. 19 is the sketch map of a Monorail's circulating-network;
FIG. 20 shows vehicles' interchange and re-organizing in a triple- track plate-turnout;
FIG. 21 shows vehicles' interchange and re-organizing in a double- track plate-turnout;
FIG. 22 shows the suspended circular-plate in a pot-cover shape, carrying bidirectional suspended vehicles;
FIG. 23 shows a 2c inner-rings-combination duplicable in two directions;
FIG. 24 modifies some turnouts of FIG. 23 into the plate-turnouts;
FIG. 25 shows positions of the 4v+M (2BF+) polybasic kite-hubs, and monorail's inner-rings-combination duplicable in four directions;
FIG. 26 modifies some turnouts of FIG. 25 into the plate-turnouts;
FIG. 27 FIG. shows the structure of monorail's 4V+ braiding rapid-rail's cross inside the poly-rails kite-hub;
FIG. 28 shows the structure of monorail's 4VX braiding rapid-rail's cross inside the eight-way poly-rails star-hub.

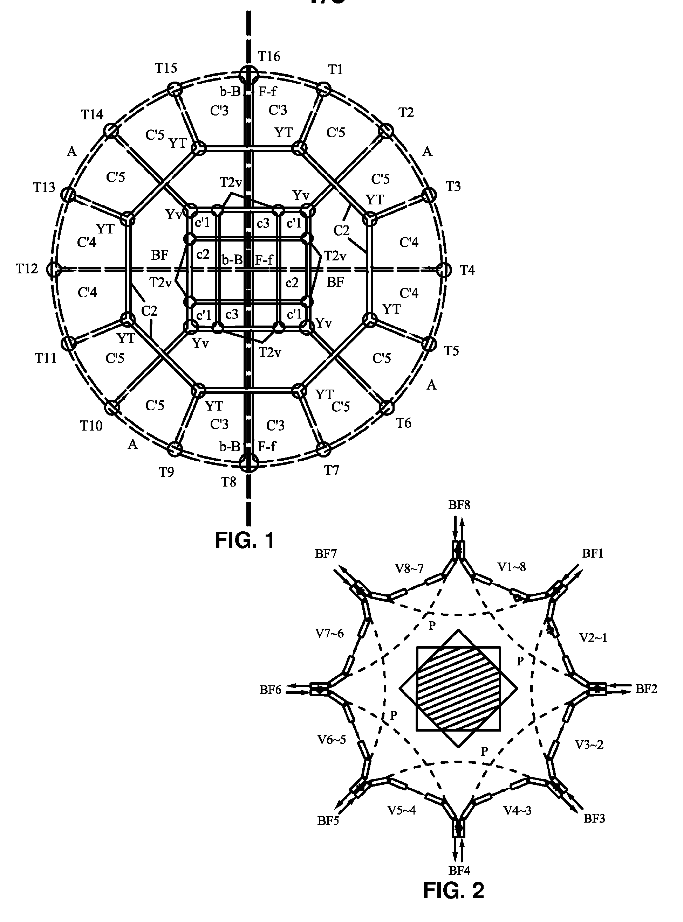

Metro or RER lines can hardly pass through a square city; while FIG. 1-T14-10/T10-T6/T6-T2/T2-T14 shows four flat-bottom V-tracks circular-turning among four BF ports at 4Yv, each from the Back-track into the right side Forth-track, taking advantage of four side streets to avoid central district, and forming a four-terminal line cored by a hollow-X turnout 4Yv. In this way, all trains on line circulate among T14-T10-T6-T2 and four double-track sections.

Shrinking above 4V-tracks into curved bottom 4V-ramps, as show by FIG. 2- BF1/3/5/7, appears a 4VX or 4V+ (BF2/4/6/8) hollow star turnout. From the central point of view, 4V-ramps turn among 4BF ports, each from B to the same side F, completing 4BF circulation; and therefore, they are both called 4V hollow-star circular-turnouts.

Accordingly, 3-nV-turn ramps or tracks without crossing each other assemble a hollow Y or star 3-n way circular-turnout; as shown by FIG. 2, the single layer 8V circular-turnout connects 8BF radiating sections into one line, fitting light-rail transit around large canters or stadiums.

Rail-transit includes narrow or monorails, all classified as light-rails. The straddle-type monorail adopts double-head trains to switch return, namely BF2Z between two terminals; whereas cored by 3-nV turnouts, formed 3-nVnZ line, all trains circulate among at least three terminals.

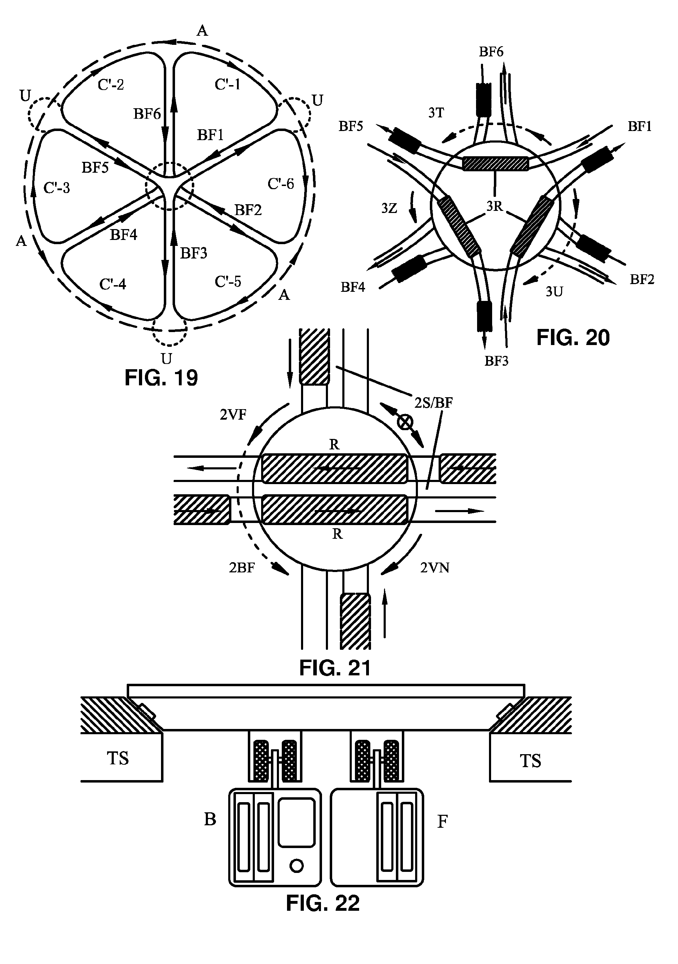

The suspended monorail and cable-car lines turn and clime easily, but fail to switch; adopting U-turn at both terminals, in fact, a BF2U flat single ring. Whereas FIG. 19-upper layer shows a hollow-Y shaped single ring, resulting in an Y3V3U circulating line cored by an Y3V circular-turnout; obviously all trains on line circulate among three terminals balanced and free of red lights.

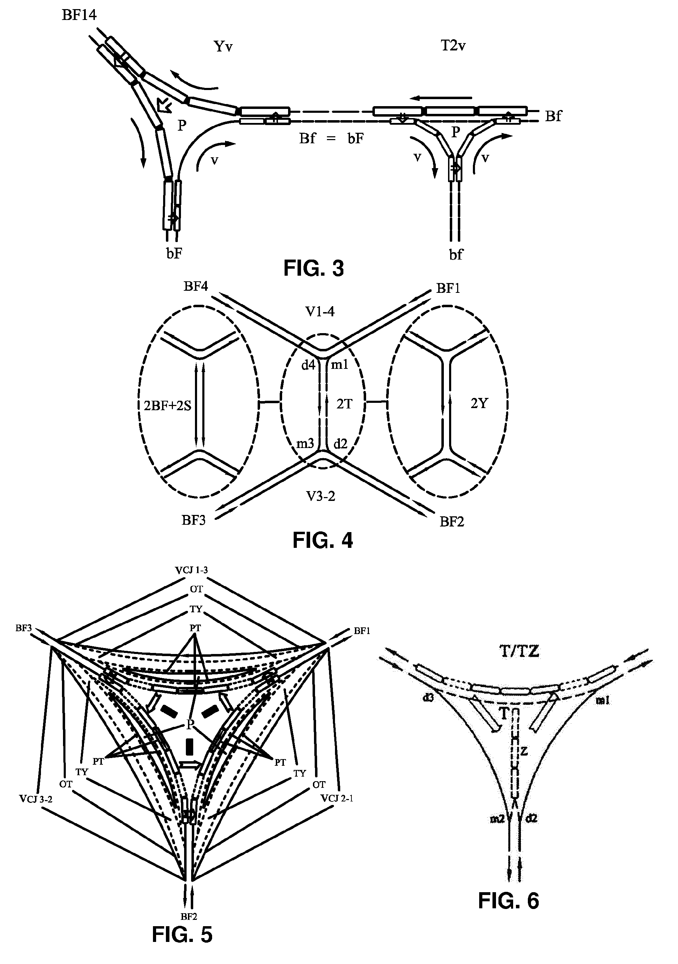

Shown by FIG. 1-Yv/T2v and magnified as FIG. 3, the flat 4V-bottoms of Metro line are one-way tracks forming square; light-rail's feeding saves land and 135° obtuse angle and straight track for rapid rail. So rapid/light rail complement each other, resulting in 4Yv and 8T2v poly-rails turnouts and Bf = bF sections (= means parallel and bi-directional).

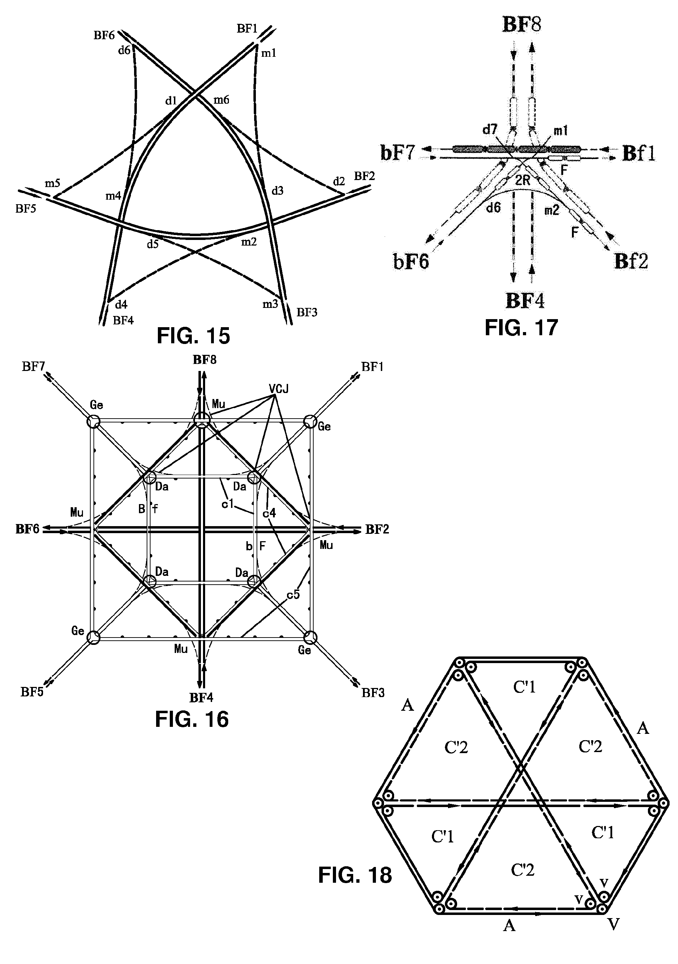

FIG. 3-T2v shows rapid rail's V-turn track is straight; FIG. 17-V2v shows cable-car's V-ramp even turning left. So the strict definition of V-ramp/track is not the angle but into the next port on same (right or left) side. That's the way to avoid red lights, for multi-way trains' turning synchronously, without crossing or interfering each other.

Shrinking just 2V-bottoms horizontally of the 4VX turnout in FIG. 1-4Yv, structured is an I-shaped four-way turnout, or 2Y connected, as shown by FIG. 4; 2Y same as Y3V in FIG. 19. Magnified Y3V in FIG. 5 shows, adding compound V-ramps makes a crescent shape, namely one-way V-turn Crescent Junction (VCJ). Inside a VCJ, all ramps non-crossing each other, diverge by the entrance side and merge by the exit side irreversibly; including an Over-taking Track (OT) on the shorter and less-curved side, Platform Tracks (PT) on the longer and more-curved side, and a maintenance Train-Yard (TY) in between. In this way, 3PTs close to each other for easy transfer, while 3OTs keep away for safety.

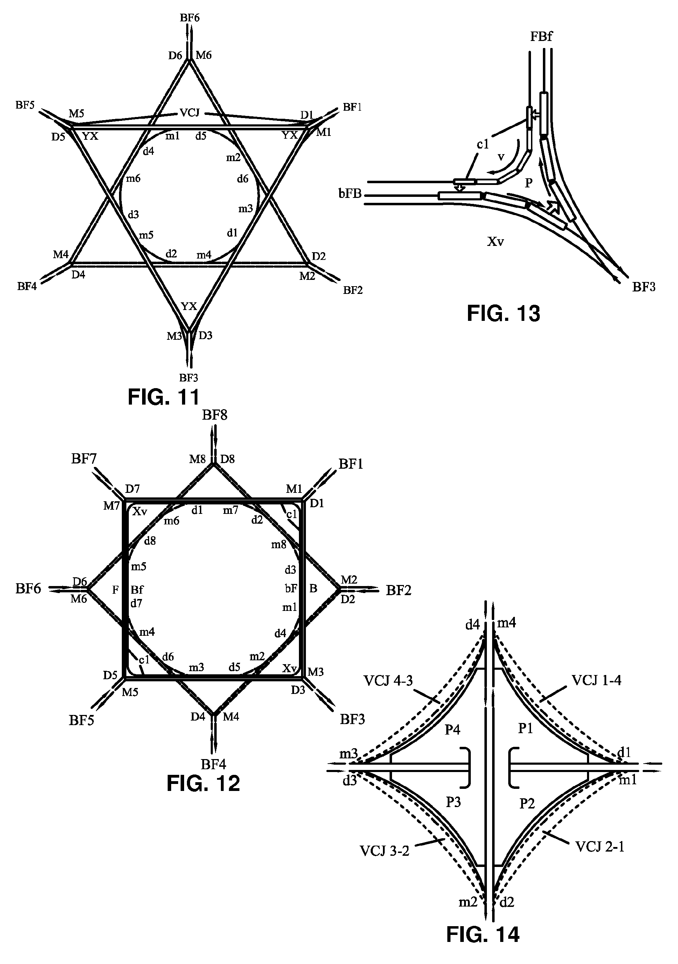

FIG. 14 shows 4VCJs around the 4V+ kite-turnout. In FIG. 11 and FIG. 16, all the flat bottom V-tracks comprise serials of 2VCJ. In this way, tri-directional trains may pass through or reorganize inside their own VCJ without interfering each other. When managing at least two VCJs concentrated in one multi-way station, dispatching is optimized, equipment and labor saved.

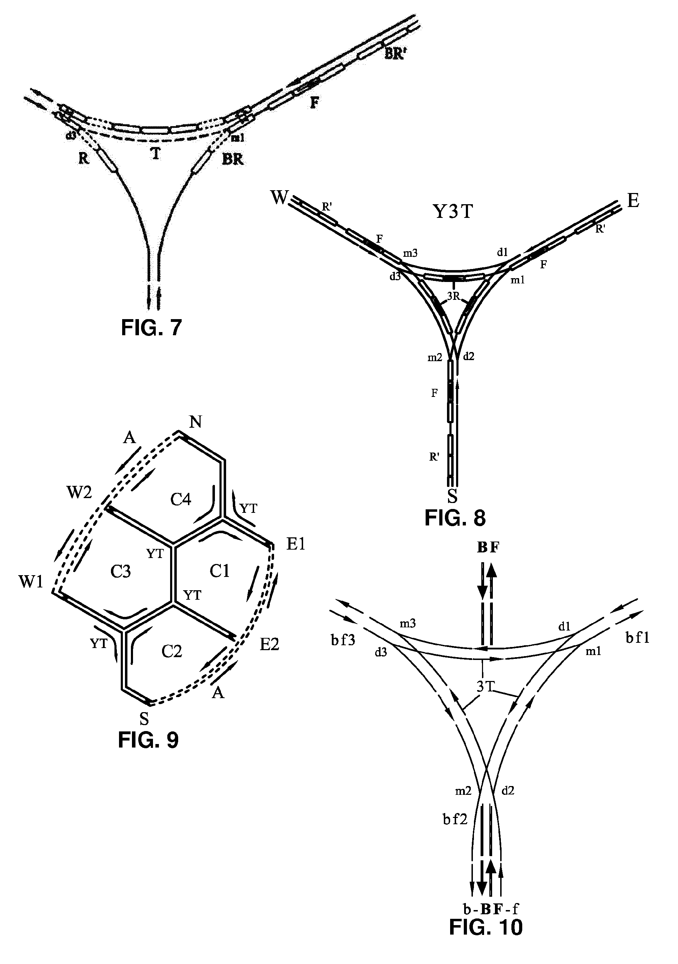

FIG. 4-2T shows, by installing a d4-m1 or d2-m3 two ramp inside the Y3V turnouts, left-turning is achieved. As magnified by FIG. 6, the d3-m1 ramp is one-way, diverging from B3 and merging at F1, crossing T- shoulders and skipping off T-foot BF port, and always restricted inside the turnout range. So the horns' shape in FIG. 7 is called a T-link. In FIG. 17-K-link, d6-m2 ramp is in horn's shape, while d6-m1/d7-m2 ramps in Z-shape; but always keep fork-angles out-pointing. We define such diverge -merge (d-m, small letter represents a small circulation) or Diverge -Merge (D-M, capital letter represents a big circulation) ramp/track inside a circular-turnout as a d-m ramp or D-M track. The switchable turnout comprises at least one d-m ramp.

FIG. 6 shows, by installing a Z-track at T-foot BF2 port, modified is a TZ turnout, deriving two more d3-m2/d2-m1 ramps. The only switch unmarked d or m is under Z-track, since it's m when trains entre Z but then d when trains exit Z.

Therefore, even if switches structure the same shape, they are still excluded if any switch ever plays diverge/merge both. Because all d-m ramps keep one-way irreversible, they make sure all turning and switching safe and efficient.

The switchable turnout employs at least one switch-frozen model. In FIG. 4, besides d4-m1/d2-m3 alternate T-link switching, keeping them off may restore 2Y, and keeping d4-m3/d2-m1 off may modify them into a double-shuttle (2S) line. The switch-frozen results in green-light fixed; so the 2Y or 2BF/2S model may offer denser shifts or longer trains during the rush-hours.

Owing to its ship-lock structure, the diverge-merge (d-m) ramp or Diverge-Merge (D-M) track employs four ways of switching: "diverge/merge both-on, diverge-on/merge-off, diverge-off/merge-on, and diverge/merge both-off". In FIG. 4, d4-m1 or d2-m3 is restricted in one YT turnout, d4-m3 and d2-m1 still restricted inside the I-shaped turnout; so they are still modified as parking lots (FIG. 8-3R) or shuttle lines (FIG. 4-2S) when diverge/merge both-off.

In FIG. 3, although T2v employs two rail-types, T-link switching is still possible between 2v ramps of light-rail, assembling a poly-rails switchable turnout.

FIG. 7 shows, a trunk train from d3 split into F and R parts, the F part across T- shoulders non-stop to post T station, apical grafting the branch return BR' part, re-organizing a full length train; the R and BR parts circular-stop by T-shoulders, after passengers' transfer, the R part to Branch terminal, the BR part to post T station waiting for the next F part.

FIG. 9-4YT shows the continues branching by T-links, from N-S as 4T-shoulders continues trunks; so that all trains' length cut by half in four branches from T to E1/E2/W1/W2 terminals, but enjoy same shifts as in the trunk. Normally passengers in branches much less than in the trunk, branch platforms cut by half as well, to save land and cost.

If passengers similar in branches and the trunk, adding as a return track as in FIG. 6-Z, namely T-foot return TZ turnout. F part same as FIG. 7 but R part apical grafting Z' part to branch; BR full trains split into BR/Z as well, BR part same as FIG. 7, Z part stop and return in/from Z-track, waiting for next trunk R.

In FIG. 4, only 2T-foot connected section is modifiable too long for 2S double-shuttles line. If 2S section too long for shuttles, the modification of TZ-foot connected 2TZ turnouts is necessary.

As shown by FIG. 8 and FIG. 10-upper layer, T-link switching d3-m1 is duplicable by twisting 120° left and right, resulting in tripled T-link switching d3-m1/d1-m2/d2-m3, and deriving d1-m3, d3-m2 and d2-m1 three d-m ramps inserting totally Y3V ramps in circulation; connecting three BF=trunks with equating traffic flows. Besides the outside Y3V-ramps turning right in circulation, the 3T-ramps circular-turn left and cross each other, forming inside reverse circulation.

As shown by FIG. 8, when three trains synchronously approach the Y3T turnout/station, each breaking into two parts, the F1/F2/F3 parts turn nearer sides non-stop, apical grafting the last-shift R'2/R'3/R'1 parts at three post-Y3T stations towards W/E/S terminals; the 3R parts turn left into d3-m1, d1-m2 and d2-m3 ramps, after changing passengers, forward to three post-Y3T stops, waiting for next-shift 3F parts. In this way, tri-directional trains are reorganized by circular-exchanging 3R parts. And by alternate switching 3d-on/3m-off before 3R stop and 3d-off/3m-on afterwards, red-lights minimized. Moreover, a Y3T turnout connects total three trunks with equating traffic flows, facilitating total six trips express or transit-on-board among three terminals.

The above cross-interchange turnout comprises Y3V circular-switching to the nearer sides in addition with Y3T cross-switching to the further sides; upgrading one-way switching to circular-switching, so called a circular-switchable turnout. Obviously, the circular-switching requires all V-turn ramps diverge-able and merge-able; and this condition can be met by inserting d-m ramps or D-M tracks into all V-turn ramps or tracks; such as d1-m3, d3-m2 and d2-m1 in the Y3T turnout. Therefore, Y3T is classified as an YT switchable-turnout, and among which the only circular-switchable turnout as well.

Comparatively, present fork-lines cored by " 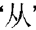 " shaped turnouts, similar to Y but lacking the third side V-ramp, and inside two tracks crossing each other, as shown by FIG. 11-YX, namely YX turnouts. YX-foot connecting BF trunk, YX-arms connecting to BF branches, causing A=B and A=C compound full-return routing in a one-trunk two-branch line. After 2YX connecting one trunk and four branches, it's hard to branch sustainably.

Although the YX turnout may facilitate front and rear separating and restoring as in Spain and Japan, but never reorganization, nor sustainable.

Whereas a YT turnout connects at least 2BF trunks; the T-link in horn's shape involve only one track, leaving the other track free of switch, or even free of rail-type as shown by FIG. 3-T2v. By A=B=C semi-return circulating, the BF line may branch sustainably, while keeping equating traffic flow (such as 2m/shift).

Connecting nYT turnouts derives n+2 terminals, as the tree line in FIG. 9- 4YT. Taking N=S as a continuous trunk cored by 4T or 4TZ turnouts, at least half trains circulate among 6 terminals; when turnouts replaced by 4(Y3T) or switch-frozen as 4(Y3V), all trains circulate among 6 terminals and totally trunks.

Traffic density=coach-number X shifts; when coach-number limited by platform length, shift-gaps become the key factor. Taking Nanjing Metro Line1 for example, N=YX=W and N=YX=E (= means parallel and bi-directional, N, YX, W, and E represent stations) four trips express at rate of 4/6; but W=E trips transit up and down. When train-shifts in N=YX trunk saturate (2m/shift), W=YX and E=YX branches share shifts (4m/shift); if further branch by YX, shift will be shared again as to 8m/shift. Supposing of equal time-distance between any two stops, then in 11 stops between N=YX occupy 11/30, 15 stops between E=YX occupy 15/30, 4 stops between W=YX occupy 4/30; 11/30+1/2 (15/30+4/30) =20.5/30; the saturation rate of the whole line traffic is about 68%.

The key of modify Nanjing Metro line 1 lays on the YX turnout, with three choices. Firstly, replacing YX by a T turnout and taking N=T=E as a continuous trunk across T-shoulders and T=W at T-foot as a branch; keep N=E return trips, N-W and W-E single trips express at the rate of 4/6; since train-length cut by half in T=W section, then 11/30+15/30+1/2x4/30=28/30, so the whole line saturation raised up to 93%. Secondly, If half-trains in T=W not enough, we can still modify T into TZ turnout with 100% saturation. Thirdly, installing a Y3T turnout to connect Y=N, Y=E and Y=W as totally trunks, with traffic 100% saturated, and 6 trips among three terminals N/E/W totally express.

Moreover, the YT turnouts facilitate continuous branching with traffic flows enhanced and balanced, by keeping at least one trunk sustainable. In case of Nanjing Metro Line 1, further branching in Y=E or Y=W extended section (similar to FIG. 6-4YT) become possible. Under the condition of saturate traffic, Line 1 is modified sustainably into a 3-n terminal circulating line, with service layover improved obviously.

When tri-directional intercity or regional railway BF lines gathering in a city, the Y3T turnout can be magnified, with V-turn ramps prolonged into tracks, forming a triangle cross-turnout as perfig11-3YX; D1-M5, D5-M3 and D3-M1 circular- switchable in three ways. The triangle cross-turnout is also visible as 3YX turnouts hugging together.

As analyzed before, present YX or 2YX line is an compound BF line. When 3YX gather together, 6BF branches connected and 6 terminals vanish, but three BF trunks remain and out-pointing. In this way, original DIVERGE/MERGE switch modified into D-M tracks; trains semi-return from and circulate among only 3 terminals. Covering 3YX turnout, a group of 3-6 sub-stations can be set, to let tri-directional trains each splitting into 2-4 parts, to cross-interchange and re- organize synchronously.

When six intercity or regional BF lines gathering in a large city, double layers of 3YX turnouts can be set as FIG. 11, adding 6 d-m ramps to connect two layers in a ring; 6-directional trains each split into three parts, to cross-interchange and re- organize synchronously. Covering the 6+ (cross) 6YX turnout in large scale, 12 stations can be set, avoiding central town and improving service layout.

Accordingly, FIG. 12-BF1/3/5/7 frames a 4YX square cross-turnout; inside which, D1-M7, D7-M5, D5-M3 and D3-M1 circular-switch in four ways. Double layers of 4YX in alternate angles, and connected appears an octagon as FIG. 12- BF1-8, 2(4YX) connected by eight additional d-m ramps; synchronous eight trains each split into four parts to cross interchange and reorganize; namely an octagonal cross- turnout.

In above polygonal cross-turnouts, "nD on" or "nM on" alternate switching same as in Y3T turnout. Switching in double layer polygonal cross-turnouts, follows the nD-nd-(nd-nm)-nm-nM order in circulation, same time at different points, or same points in different time; even if 1-2' per switch, 6-8 trains take 6-16' to cross-interchange and reorganize into 6-8 new trains synchronously.

Shown by FIG. 13, a kite-shaped turnout comprises one set of 4V-ramps or tracks totally inserted by d1-m4/d4-m3/ d3-m2/d2-m1 ramps/tracks, and cored by 4T-links: d2-m4/ d3-m1/d4-m2/d1-m3, connecting 4BF=trunks; namely a 4V4T through-interchange turnout, and in short, a kite-turnout.

FIG. 14 shows a hexagram through-interchange turnout, comprising two sets of circular 3V-ramps totally inserted by d-m ramps: B1-d1-m5/B5-d5-m3/B3-d3-m1 and d2-m6-F6/d6-m4-F4/d4-m2-F2, connecting 3BF = trunks in two layers (not three) with equating traffic flows.

In summary of above large scale circular-turnouts for Intercity, they each comprise at least three circular V-turn ramps/tracks, totally inserted by d-m ramps or D-M tracks, connecting at least three BF=trunks with equating traffic flows; and therefore classified as polygonal interchange turnouts.

In urban group region or continent, sustainably connecting intercity or RER BF=sections by circular-turnouts as cores and/or key-nodes, will certainly result in circulating lines/networks. Provided all stations between similar time-distance, all trains in orderly circulation may depart or arrive synchronously. Passengers between any two stations may just choose their directions, and then move ahead or backward on board, to arrive expressively.

According to Graph Theory, a n-way node in connected graph possesses vertex n. In case of mass transit, a n-way station handles n(n-1) trips, passing through or transit, except departure and arrival; i.e. 6 trips by a 3-way station, 12 trips by a 4-way station, 20 trips by a 5-way hub station, 30 trips by a 6-way hub station and 56 trips by an 8-way hub station.

In reference of the feeder-line in sea freight, we define the transits between at least two rail-types as poly-rails feeder-ship, and the lighter or miner rail-type as the feeder. The existing light-rail feeding Metro or Metro feeding intercity is simply double or triple layers' crossing.

Shown by FIG. 18-centre, double layers of Y3T or y3t/Y3T assemble a snow-flake or poly-rails six-way hub; handling 30 trips (2.5 times than Cross-hub's 12), including 12 express (3 times than Cross-hub's 4) in the same two layers space. In same two storied space, the hub may dispatch 30 trips (2.5 times of a cross-hub), among which 12 trips express (3 times of a cross-hub).

Present uni-platform transit of New York/Hong Kong Metro between lines of same rail-type, can be expressed as B-BF-F or B-B/F-F. Whereas the poly-rails feeder-ship facilitates b-BF-f transit as shown by FIG. 1- center shaft.

Shown by FIG. 1-T8/T16 and magnified by FIG. 10, when the intercity BF line covered and fed by Metro's YT station, framed is a Candle-stick hub, facilitating b-BF-f transit between two rail-types.

FIG. 2-4V+/4VX turnouts are monolayer and central hollow; fitting well the rapid rails' cross, by threading or braiding; making transit easier, and saving space and cost as well.

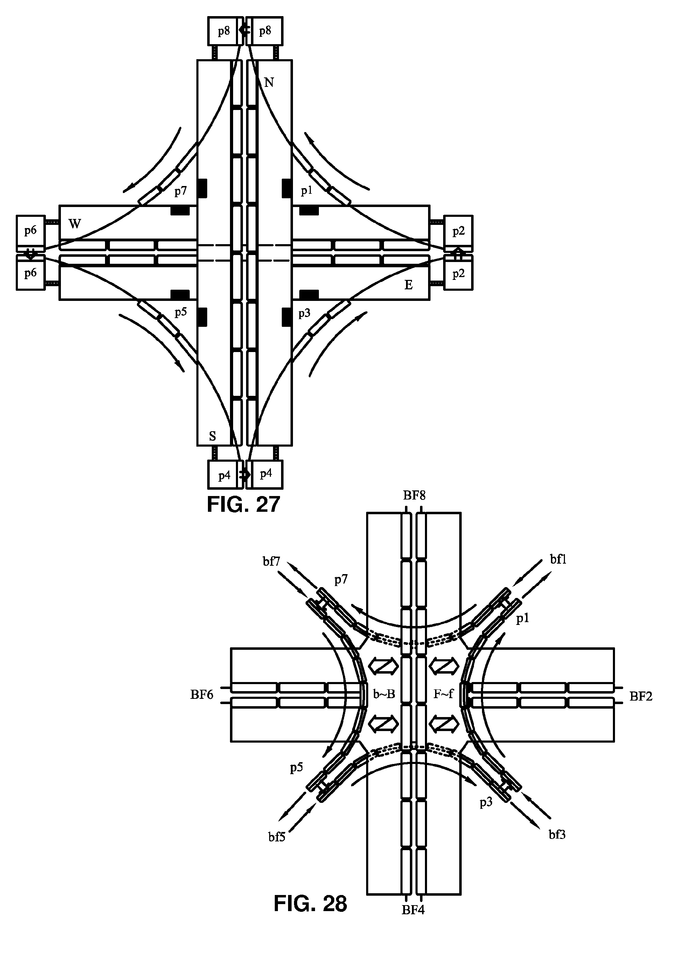

Shown by FIG. 27, when a Metro's cross-hub fed and overlapped by Monrail's 4v+ turnout, there comes a poly-rail Kite-hub; in the same tunnels, horizontally bf turn up and vertically bf down, stopping upper p2/6, and under p4/8, except multi-lateral P1/3/5/7.

FIG. 28 shows, when a Cross-hub of Metro or RER or both together fed and bladed by a Monorail 4vX Hollow-star turnout/line, structured is a poly-rails 8-way Star-hub; handling 8 trips express, 4 trips circular transfer at bf1/3/5/7, and 8 trips b-BF-f follow-way feeding totally 56 trips; nearly 5 times than the original Cross-hub and still in the same two-layer space.

Shown by FIG. 16-Ge/Da/Mu and magnified as FIG. 17, when rapid rails' 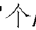 / 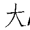 / 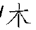 sub-stations threaded by c1/c4/c5, they are modified into poly-rails hubs. FIG. 17-BF8/bF6/BF4/Bf2 form a poly-rails 4-way 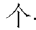 -hut, BF8/Bf2/bF6 make a Yv set and the v-ramp over-crossing BF4=8 fulfills third side circulation; it handles 5 express trips among total 12.

BF8/bF7/bF6/Bf2/ Bf1 form a poly- rails 5-way 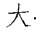 -hub, with a same Yv set; handling 7 express trips among total 20. The whole FIG. 17 appears a poly-rails 6-way 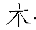 -hub, handling 9 express among total 30 trips.

Shown by FIG. 1-square circle and magnified by FIG. 3, the double-track sections between 4Yv and 8(T2v) comprise rapid/light rails, therefore named as asymmetric Bf=bF sections, with asymmetric rail-types including volumes, shifts and stops. Suppose the rapid-rail trains 2'/shift, stopping in hubs only; while light-rail trains 1'/shift, stopping at all stations (FIG. 15-half dots).

The poly-rails in feeder-ship normally all keep right as in USA, or all left as in UK. But on Euro-Asia continent, most intercity keep left while urban rails keep right. FIG. 12 shows, when light-rail c1 inserting intercity 4YX turnout (BF1/3/5/7), framed are 4YXv poly-rails turnouts and four FBf = bFB asymmetric sections. In reference FIG. 1-centre, c1 is still replace-able by 3c-combination.

Adopting the circular-turnout(s) a core or key nodes, connecting at least three BF=sections, structured is a semi-return circulating line; including a hollow star line as in FIG. 1-2, a tree line in FIG. 4/9, a polygonal line cored by FIG. 11-16, and a 8YT circle radial line as in FIG. 1-T1/T3/T5/T7/T9/T11/T13.

Present circle line is made by two rings Clockwise and Anti-clockwise, namely an A/C line. The existing Metro networks normally comprise 1-3A/C+nBF lines, crossing each other but disconnected.

Whereas the circulating network replaces the inner ring by an inner-rings-combination, namely A/nC or C/nA; all vehicles circulate in every section besides the outer-ring no return.

FIG. 9 shows, when terminals E2/W2 modified into YT stations, and further connect their left/right terminals into an outer circle; same rotation C1-4 ring by ring, covered by outer ring A, the tree-line modified into an A/4C circles-combination, with all non-return vehicles circulating inside.

FIG. 18 shows the Cable-Car's A/2C' circulating network; inside which C'1 and C'2 each in a triple-leaf shape, and comprises three open-end rings of same rotation, so called as self-cross-loop. Comparatively, 8-shaped loop has two open-end rings with opposite rotation; and it's therefore except.

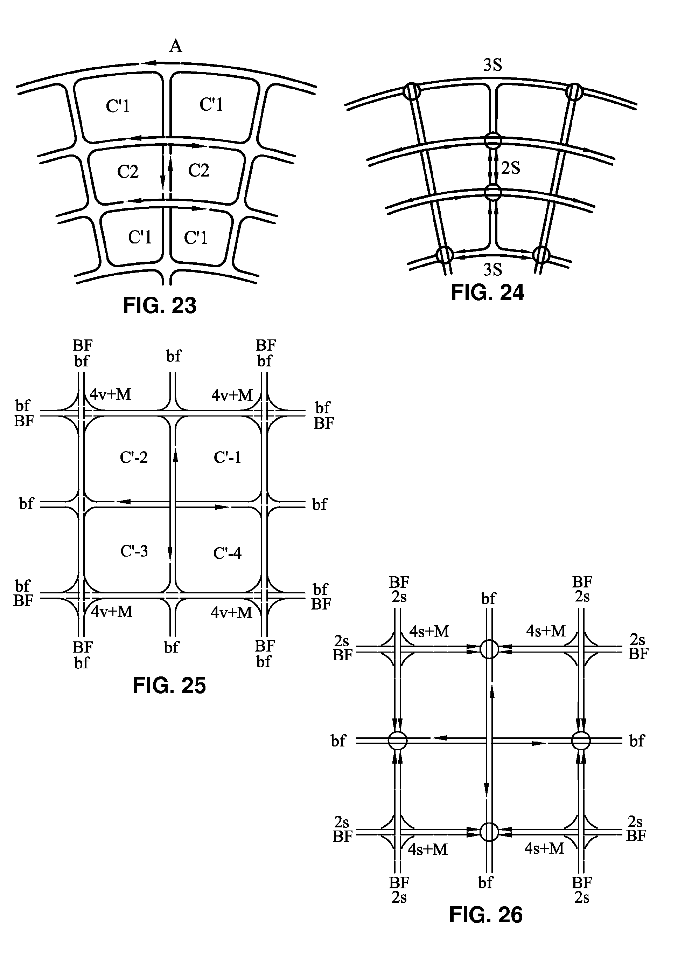

FIG. 19 shows an orange-peels inner-rings-combination, with only one self-cross-loop, comprising six open-end rings C'-1/2/3/4/5/6 of same rotation. FIG. 25 shows a butterfly-shaped self-cross-loop, but including four open-end rings C'-1/2/3/4, of same rotation; it forms an inner-rings-combination alone, and is duplicable in four ways.

FIG. 23 shows an inner-rings-combination, made of one self-cross-loop C'1 plus one inner-ring C2 of same rotation. The inner-rings-combination of light- rail in FIG. 1-centre, is assembled by one self-cross-loop c'1, plus two rings c2/c3 of same rotation; namely 3c-combination.

FIG. 1 shows, on the base of Cross 2BF lines, 4V hollow-X line and 8YT circle- radial line, totally connecting T1-16 terminals by YT turnouts, then all four lines merge into one A/C2-5 circulating-network; inside which C'3-5 as self-cross-loops, plus C2 as an inner-ring of same rotation, and C1 replaced by 3c inner-rings-combination; then all trains circulate among all sections and stations, offering more express trips.

Knowing above T1-16 modification, we may preset them as T2Z transitional terminals, same as T-links. Mono-head trains turn over the right T-shoulder, backward over the left T-shoulder, and forward again to T-foot. Although T2Z in same shape of FIG. 7, but d3-m1 is not a d-m ramp before modified into a YT station.

A circulating network comprises as least one inner-rings-combination, which is duplicable in two (FIG. 23) or four (FIG. 25) or six (FIG. 18-19) directions, inside the same outer ring; a feeder-net may omit the outer ring (FIG. 1-3c/FIG. 12-c1).

The limit of Metro shift-gap is about 2' for BF lines, but 72" for non- return A/C lines (experience from Japan). Accordingly, the circulating-network may increase train-shifts and transport capacity by 80%.

The suspended monorail and cable-car can is limited by switching. With the help of circulating network and plate-turnout, their networks and service can be brought into full play, while their equipments saved. FIG. 15-c1/c4/c5 shows light-rail inner-rings inserting rapid-rails turnouts, framing three non-return circulating feeder networks; when connected by K-links merging into one polygonal inner-rings-combination, i.e. a 3c feeder-net. The light-rail threads or braids " 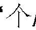 / 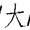 / 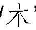 " hubs as well in this case.

When light-rail 3c feeder net inserting FIG. 1-A/4C rapid-rails' network, service layover of downtown improved obviously. If FIG. 15-c1 replaced by FIG. 1-3c, assembled is 5c inner-rings-combination, made of c'1/c2-5 circulating feeder-net.

FIG. 20 shows, the tri-directional plate may circular-switch in 3 or 6 way turnout as FIG. 19, by dispatching tri-directional trains synchronously passing through, each leaving the last coach inside the plate for switching. The plate may turn 120° or 60° for 3 or 6 way turnout, to turn left or straight forward.

FIG. 21 shows a bidirectional plate for a cross-turnout, bidirectional trains synchronously passing through, each leaving the last coach inside the plate for switching. The plate not only offer easy switching, but also save space.

FIG. 22 shows a suspended plate in pot-cover's shape, carrying BF trains to pass through or circular-switch alternately. Obviously each track on a ground plate, or track-slot under the suspended plate, is longer than a single coach and coincide the surrounding track or track-slot.

When part of turnouts in FIG. 23 and FIG. 25 modified into plate-turnouts as in FIG. 24 and FIG. 26, traffic among warp and weft rails is achieved. During the rush- hours, a plate-frozen model may enhance the straight traffic; whereas the 2 ends plate- off section is modified into a double-shuttles (2s) line, the 3 or 4 ends plate-off section is modified into a 3s or 4s line. Provided the 3-4 BF sections of same time distance, 3-4 trains depart, meet and stop at same time; circular-transfer is still available during alternate shuttles keeping right or left.

Installing circular-plates for terminals' U-turn may save equipments and space, and lay foundation for future plate-turnout as well.

## Claims

1. A sustainable circulating railway line/network, comprising circular-turnouts, covered by multi-way stations, as cores and/or key nodes of circulating-line/network including poly-rails feeder-line/net derived; wherein the circulating railway line/network employs a circulating route-system to minimize red-lights, enhance and balance traffic flow, facilitates vehicles' interchange and reorganizing, and passengers' on-board and/or easy transfer, improves service layover, safety and efficiency in general, and effectively reduces the building and operating cost of the railway network.

2. The sustainable circulating railway line/network of claim 1, **characterized in that** the circular-turnout is an at least three-way turnout for bidirectional double- tracks, comprising at least three multi-connected Back-and-Forth ports, and at least one set of at least three-way circular V-ramps/tracks; the circular V-ramp/ track turn from the Back-track of each BF port into the Forth-track of the same side nearby BF port, completing a circulation.

3. The sustainable circulating railway line/network of claim 1 or 2, **characterized in that** the multi-way station comprises a station or a group of sub-stations covering a circulating- turnout, the multi-way station is a group of sub-stations covering an interchange hub, or a station covering a polybasic interchange hub, and a multi-lateral platform is monolayer or split-leveled or connected by split-level passages, comprising at least three boarding sides for trains of at least one rail-type.

4. The sustainable circulating railway line/network of claim 1 or 2, **characterized in that** the circulating line/network is a feeder-line or feeder-net of a miner rail-type; the feeder-line or feeder-net covers or braids or inserts or threads at least one major rail-type, resulting in poly-rails hub/hubs or poly-rails turnouts and poly-rails sections; the feeder-net is an inner-ring or inner-rings-combination or a polygonal inner-rings-combination; the polygonal inner-rings-combination comprises at least two inner-rings of same rotation and connected in alternate angles, the inside ring is replace-able by an inner-rings-combination; the poly-rails hub comprises at least two rail-types, and one set of circular V/v- ramps of at least one rail-type.

5. The sustainable circulating railway line/network of claim 2, **characterized in that** the V-ramp comprises parallel ramps in a crescent shape, assembling a Crescent Junction; the V-track comprises a serial of two Crescent Junctions; the Crescent Junction is one-way-through, comprising an Overtaking Track by its shorter and less-curved side, Platform-Tracks by its longer and more-curved side, and a Train- Yard in between.

6. The sustainable circulating railway line/network of claim 2, **characterized in that** the d-m ramp or D-M track is in a ship-lock structure and employs four ways of switching: diverge/merge both-on, d-on/m-off, d-off/m-on, diverge/merge both-off; the switchable- turnout or circular-switchable turnout employs at least one switch-frozen model, during which period a diverge/merge both-off ramp/track is modified as a parking lot or a shuttle line, without interfering rest of the traffic in the circular-turnout; the circular turnout is a hollow-star turnout, comprising at least one set of at least four-way circular V-ramps/tracks in circulation, connecting at least four BF ports and double-track sections.

7. The sustainable circulating railway line/network of claim 2, **characterized in that** the plate-turnout comprises at least one circular-plate; the circular-plate is a double-track plate or a triple-track plate, facilitating bidirectional or tri- directional vehicles to pass through or circular-switch; the circular-plate is a suspended plate of a pot-cover shape, comprising double or triple track-slots fixed underneath the plate, facilitating bidirectional or tri-directional suspended vehicles to pass through or circular-switch; the circulating line/network employs at least one plate-frozen model, during which period, the both ends plate-off double-track section is modified into a double-shuttles line; the at least three ends plate-off double-track sections are modified into an at least triple-shuttles line.

8. The sustainable circulating railway line/network of claim 3, **characterized in that** the multi-way station comprises at least one multi-lateral platform, which further comprises at least three boarding sides for at least one rail-type, and which is mono- layer or split-leveled or connected by split-leveled passages, and the multi-lateral platform facilitates passengers' circular-interchange, when at least three trains synchronously approach and stop by in a manner of head-by-end.

9. The sustainable circulating railway line/network of claim 4, **characterized in that** the circulating line/network is a feeder-line or feeder-net of a miner rail-type; the feeder-line or feeder-net covers or braids or inserts or threads at least one major rail-type, resulting in poly-rails hub/hubs or poly-rails turnouts and poly-rails sections; the feeder-net is an inner-ring or inner-rings-combination or a polygonal inner-rings-combination; the polygonal inner-rings-combination comprises at least two inner-rings of same rotation and connected in alternate angles, the inside ring is replace-able by an inner-rings-combination; the multi-way station is a station or a group of sub-stations covering the circular-turnout, including a station or sub-station covering a poly-rails turnout or poly-rails hub.

10. The sustainable circulating railway line/network of claim 6, **characterized in that** the circular turnout is a switchable turnout or a circular-switchable turnout; the switchable turnout comprises at least one d-m ramp; the circular-switchable turnout comprises at least one set of at least three way circular V-ramps/tracks totally inserted by d-m ramps or D-M tracks; the d-m ramp or D-M track is one-way, starting from a diverge-switch and ending by a merge-switch, both diverge/merge-switches irreversible and restricted within the circular-turnout range.
